# EUROPEAN PATENT APPLICATION

(11) **EP 1 241 587 A1**
(43) Date of publication of application: **18.09.2002**
(21) Application number: 01400648.0
(22) Date of filing: 12.03.2001
(51) Int. Cl.: G06F 17/30

(54) **Method for processing content data**

(71) Applicant: THOMSON multimedia, 92100 Boulogne Billancourt (FR)
(72) Inventor: Hiron, Franck, 92648 Boulogne Cedex (FR); Tazine, Nour-Eddine, 92648 Boulogne Cedex (FR)
(74) Representative: Kohrs, Martin

(57) **Abstract**

Method for processing document description data in a receiver device comprising the step of receiving document description data of documents from a plurality of sources. The method is characterized by the steps of:
- providing a translation table as a function of each source, said translation table comprising information for deriving attribute values according to a common classification from attribute values according to a source classification;
- extracting attribute values from description data relating to a given document provided by a source;
- determining attribute values according to the common classification for said given document with the help of the appropriate translation table;
- indexing the given document in the common classification.

## Description

The invention concerns a method for processing content descriptive data, and in particular program guide data, received from a plurality of sources. The invention can be used for example in the frame of a home network, where devices connected to the network provide content data.

A description is associated with each document (audio or video files, still pictures, text files, executable code...) available in a home network. This description may be more or less precise. It may simply be the document's title, or it may comprise many more items, depending on the document's nature: the description of a movie can for example include a summary, a list of actors, a time of broadcast for documents which are not immediately available...

Descriptions provided by different sources are generally not homogeneous. For example, for a documentary, a first television program guide available from a certain website will list a single 'Theme' attribute, with the value 'Documentary'. The description of a similar document available in DVB Service Information tables cyclically broadcast, and received by a television receiver/decoder, might contain the attribute 'Type', with a value 'Non-Fiction', and an attribute 'Subtype' with a value 'Documentary'. Classification of a document depends on the provider.

In order to retrieve similar documents from different sources, the user has to individually access each classification, and has to be aware of every source.

The invention concerns a method for processing document description data in a receiver device comprising the step of receiving document description data of documents from a plurality of sources, said method being characterized by the steps of:
- providing a translation table as a function of each source, said translation table comprising information for deriving attribute values according to a common classification from attribute values according to a source classification;
- extracting attribute values from description data relating to a given document provided by a source;
- determining attribute values according to the common classification for said given document with the help of the appropriate translation table;
- indexing the given document in the common classification.

The classification in a unique database allows a user to easily find a document he is looking for: there is only one database he has to access. Moreover, he does not need to know what the source of a document on the network is to formulate his query.

The use of a translation table for each source permits an easy update in case of change of either the source classification or the common classification.

According to a specific embodiment, the method further comprises the step of updating a translation table when the classification used by a source changes.

When a source is updated, for example a new musical trend is added to the classification of a music support purchase website, the corresponding translation module may easily be updated as well.

According to a specific embodiment, the method further comprises the step of adding a translation table when a new source is connected to the network.

A new translation module may be needed when a new source is connected. For example, when the user subscribes to a new service, such as a video rental website, a corresponding translation module is downloaded from the website to be added to the user's translator module.

According to a specific embodiment, the step of extracting attribute values comprises the step of parsing at least one attribute value of provided by a source for a document in order to extract additional attribute values.

Certain fields provided by the source to describe a document may contain additional information which is not explicitly labeled. For example, an event summary may contain keywords, actor names, dates, times and other information which is made available by parsing the content of the field and explicitly labeling that content. For the purpose of the analysis of the field, the translation table of the source may provide a description of the internal structure of the field.

According to a specific embodiment, a translation table comprises a look-up table associating to an attribute value of a source classification an attribute value of the common classification.

According to a specific embodiment, a translation table comprises a set of functions for deriving a given attribute value of the common classification from a plurality of attribute values provided by a source.

According to a specific embodiment, the plurality of attribute values provided by the source used to determine the given attribute value of the common classification are from a plurality of different attributes.

Other characteristics and advantages will appear through the description of a non-limiting embodiment of the invention, explained with the help of the attached drawings among which:
- figure 1 is a schematic diagram of a home network;
- figure 2 is a block diagram illustrating the principle of processing of different content descriptive data carried out by a content descriptive data concatenation module according to the present embodiment;
- figure 3 is a diagram illustrating in more detail the different types of processing carried out on content descriptive data provided by different sources.

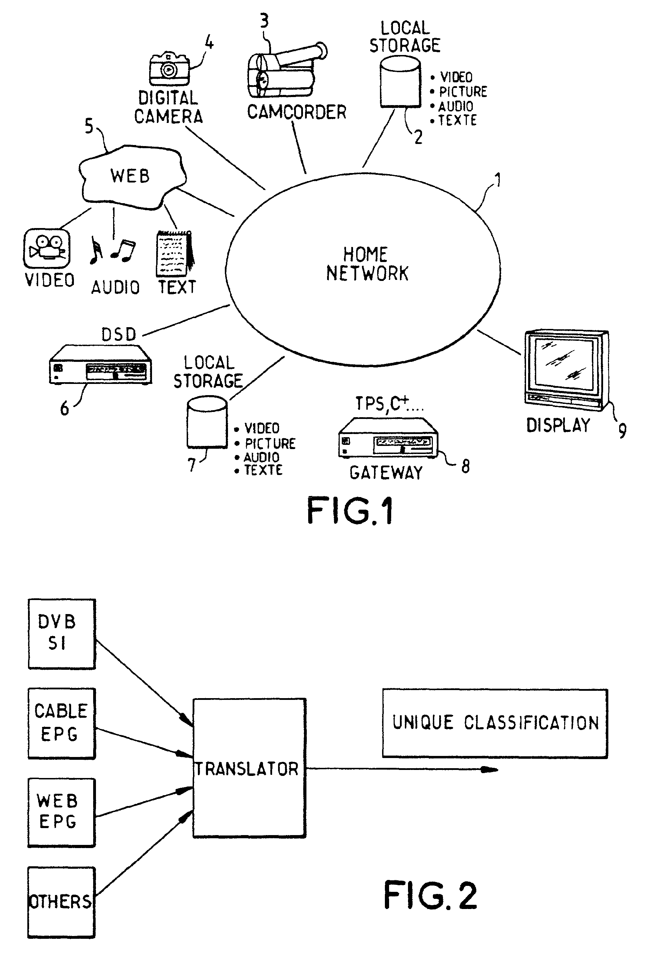

The home network of figure 1 comprises a communication medium 1, for example a IEEE 1394 serial bus, to which a number of devices are connected. Among the devices of the network, local storage devices 2 and 7, which are for example hard disc drives, stores video and audio streams or files, still pictures and text files, executable files... collectively called 'documents' in what follows. A camcorder 3 and a digital camera 4 are another source of video, audio and picture files. The network is also connected to the Internet 5, through a gateway device (not illustrated). More video and audio files, as well as other types of files, are available from this source, as well as from a tape-based digital storage device 6. A digital television decoder 7 gives access to different program guides for different channels. Lastly, a display device 9 is also connected to the network.

According to the present embodiment, display device 9 retrieves document descriptions from other devices of the network and processes the descriptions in order to present to a user a view of all documents available on the network, regardless of their source, which will remain transparent to the user. The description of each document is analyzed upon retrieval and is used to reclassify the document according to a unique, homogeneous classification.

Figure 2 illustrates the principle of the invention. On the left hand of the figure, a number of different sources of electronic program guides are shown. These sources are tapped by a translator module, whose task it is to extract and analyze the document descriptions from each source, and to reassign attributes from the unique classification to each document. The individual classification of each of the sources may be well known (for example, certain DVB compatible providers will use the standardized DVB Service Information format), while in other cases, such a classification may be proprietary (electronic program guide available from a website, or from certain broadcasters).

In the present example, the translator and the multimedia database containing the descriptions of documents according to the common classification are managed by an application run by the device 9, since this device will be accessed by the user for his queries regarding the documents.

When a new device is connected to the network -or when the descriptions available from a source have been modified - the common multimedia database must be updated.

To classify documents in the same manner according to the common classification, it is necessary to know - at least to some extent, as will be seen - the structure of the classification of each source. This structure is described in what is called a translation table, and can take the form of a text file.

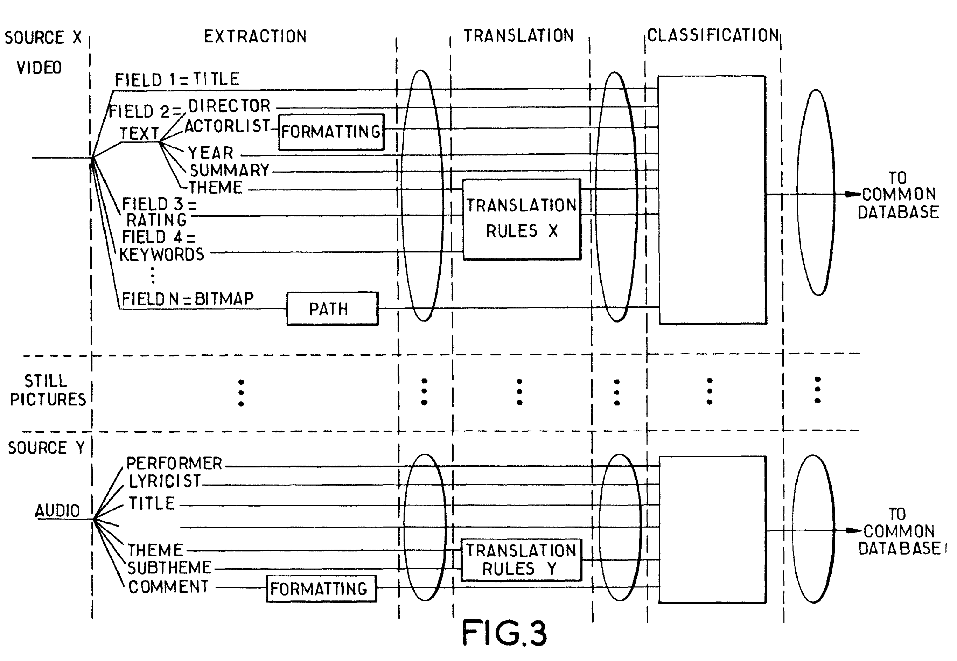

Figure 3 is a diagram illustrating the processing of source data by the application of device 9 in order to insert a document into the multimedia database.

For the purpose of the example, it will be supposed that the document is a video stream, but processing of another type of document would be similar.

Before the process of figure 3 is started, it is supposed that the source of the document to be reclassified has been determined by the application, so that the proper translation table can be applied.

In a first step, the description data relating to a document is parsed by a parser, based on the appropriate translation table text file, which describes the source classification format. According to the example of figure 2, the extracted attributes are the title, a text field, a parental rating, a list of keywords and a bitmap file. Other data typically includes the broadcast time and date.

According to the present embodiment, the application further analyzes certain attribute values, in particular text fields, to determine whether further, more detailed attribute values can be extracted. The text field of figure 2 contains the name of the director, a list of actors, the year of release, a summary and a type indication. These different items are themselves attributes, and although they are not necessarily coded in different fields by the source, it is advantageous for the reclassification to split them into different fields. This splitting can be carried to a further level, by extracting keywords from the summary. These keywords can be used in addition to those which are explicitly made available by the source.

Attribute values such as bitmaps - which have generally little influence on the translation unless more explicit attributes can be extracted from them - need not necessarily be available as such for the purpose of the translation and insertion into the multimedia database. It suffices to indicate a path where these attribute values are stored, which may be a local path (e.g. to a storage device in the network) or a remote path (e.g. to a website, a server...).

Following the extraction, the attribute values may require to be reformatted. E.g., the list of actors may be put into alphabetical order.

In a second step, the source format description is translated into the common classification format description. Only certain attributes need to be used for this purpose. Attributes which are characteristic only of the specific document such as the title or the bitmap, or which have an unambiguous meaning whatever the classification (e.g. starting time, ending time, duration) need not be modified and will be used as is, except for simple reformatting. For example, the attribute 'Title' of the common classification may have a maximum length: if the attribute value of the source classification is longer than the maximum length, it is truncated.

Other attribute values, in particular those which define categories of documents (keywords, theme, sub-theme, parental rating) will generally need to be translated. For example, in a source classification, a parental rating may consist in an age range characterizing target public of a movie ('Under 13', '13+', '16+'...) while in the common classification, parental rating may consist in a letter code ('PG' for Parental Guidance, 'R' for Restricted...). For the purpose of the translation, the corresponding translation table comprises a look-up table giving the correspondence between the two parental rating systems.

Another important example concerns the translation of attributes such as themes. The source classification may use a theme classification comprising for each object one or more main themes and for each main theme, one or more sub-themes. For instance, 'Adventure', 'Thriller', 'Sports' constitute possible values for a theme in a source classification, while 'Football', 'Skating' and 'Athletics' constitute possible values of sub-themes for 'Sports'. The common classification may be simpler than the source classification, i.e. use only a theme and no sub-theme, or may be more complex and add another level in the theme hierarchy. At each level, the source classification and common classification may have a different number of possible values.

According to the present embodiment, in order to achieve proper translation of such attributes, several attribute values of similar nature of the source classification are used to determine an attribute value in the common classification.

Moreover, attributes of different nature are crossed to refine the translation.

An example using these concepts will now be given.

The source classification lists the following theme values for a given movie:
'Action', 'Adventure', 'Mystery', 'Thriller'
It also lists the following keywords:
'Spy', 'Sequel'

These keywords were either explicitly provided by the source, or extracted from a summary provided by the source.

The source classification does not possess any sub-themes.

The common classification possesses theme and sub-theme attributes. Only one theme attribute value may be chosen, and for this particular theme attribute value, only one sub-theme.

The translation is carried out using the following rules. These rules are stored in the translation table, along with the source classification structure used for attribute value extraction, and look-up tables relating to other types of translation, such as the rating translation already described.
(a) Theme value selection is as carried out as follows:
   The translation table lists theme attribute values according to their priority. The translation module checks for the presence of the first theme value in the list, and if this value is not found in the values provided by the source, the module checks for the next value etc., until a value is found.
   For each of the listed theme values, the translation table provides a theme value of the common classification. This value will be used as the single theme attribute value of the common classification.
   For the purpose of the present example, we will suppose that the attribute value provided by the source and having the highest priority is 'Action', and that the corresponding attribute value of the common classification is 'Adventure'.
   The corresponding part of the translation table may look as follows:
   - IF source_theme = 'xxxxx' then common_theme = 'yyyyy'
      ...

   To refine theme value attribution, logic rules are used, which combine several source attribute values. An example of such a rule, stored in the translation table, is:
   - IF source_theme_values include 'Comedy' AND source_theme_values include 'Drama' THEN common_theme = 'Dramatic Comedy'

   This rule would typically be of higher priority than the rules checking separately for the existence of the source theme values 'Comedy' and 'Drama', since it avoids an ambiguity arising from the simultaneous presence of two values.
(b) Sub-theme value selection is carried out as follows:
   As mentioned above, there is no sub-theme in the source classification. In such a case, values from different attribute types are crossed. According to the present embodiment, theme attribute values and keyword attribute values are used jointly to define a sub-theme. For this purpose, the translation table comprises a list of rules, ordered by priority. The translation module checks, in order of priority whether one of the rules may be applied, given the attribute values provided by the source.
   For the purpose of the present example, the translation table contains the following rules:
   - IF source_theme_values include 'Action' AND source_keyword is in the list {'espionage', 'spy', 'secret', 'agent'} THEN common_sub_theme = 'Espionage'.
   - IF source_theme_values include 'Mystery' THEN common_sub_theme = 'Mystery'
      ...

   In the present case, the sub-theme will be 'Espionage'. As can be seen from the second rule, a sub-theme can also be derived directly from one or more themes, without the help of keywords.
   Of course, other attributes than themes or keywords can be submitted to the same treatment. Moreover, more than two attribute types may be used in the rules defined in the translation table.
(c) Keyword values are selected as follows:
   According to the present embodiment, keywords are used as such in the common classification. There is no predefined list of keywords in the common classification which would limit the choice. Other limits may exist, such as a maximum number of keywords.

In a third step, once the content descriptive data of a document has been translated, i.e. is now available under the format of the common classification, the document is indexed in the global database.

## Claims

1. Method for processing document description data in a receiver device comprising the step of receiving document description data of documents from a plurality of sources, said method being **characterized by** the steps of:
- providing a translation table as a function of each source, said translation table comprising information for deriving attribute values according to a common classification from attribute values according to a source classification;
- extracting attribute values from description data relating to a given document provided by a source;
- determining attribute values according to the common classification for said given document with the help of the appropriate translation table;
- indexing the given document in the common classification.

2. Method according to claim 1, further comprising the step of updating a translation table when the classification used by a source changes.

3. Method according to claim 1, further comprising the step of adding a translation table when a new source is connected to the network.

4. Method according to one of the claims 1 to 3, wherein the step of extracting attribute values comprises the step of parsing at least one attribute value of provided by a source for a document in order to extract additional attribute values.

5. Method according to one of the claims 1 to 4, wherein a translation table comprises a look-up table associating to an attribute value of a source classification an attribute value of the common classification.

6. Method according to one of the claims 1 to 5, wherein a translation table comprises a set of functions for deriving a given attribute value of the common classification from a plurality of attribute values provided by a source.

7. Method according to claim 6, wherein the plurality of attribute values provided by the source used to determine the given attribute value of the common classification are from a plurality of different attributes.
